# EUROPÄISCHE PATENTSCHRIFT

(11) **EP 3 459 642 B1**
(45) Veröffentlichungstag und Bekanntmachung des Hinweises auf die Patenterteilung: **05.08.2020**
(21) Anmeldenummer: 17020442.4
(22) Anmeldetag: 26.09.2017
(51) Int. Cl.: B05B 13/00, B05B 15/00

(54) **PULVERBESCHICHTUNGSANLAGE ZUM BESCHICHTEN EINES WERKSTÜCKS MIT BESCHICHTUNGSPULVER**
POWDER COATING ASSEMBLY FOR COATING A WORKPIECE WITH COATING POWDER
INSTALLATION DE REVÊTEMENT PAR POUDRE DESTINÉE À RECOUVRIR UNE PIÈCE À USINER PAR POUDRE DE REVÊTEMENT

(43) Veröffentlichungstag der Anmeldung: 27.03.2019
(73) Patentinhaber: WAGNER INTERNATIONAL AG, 9450 Altstätten (CH)
(72) Erfinder: Studerus, Patrik, 9323 Steinach (CH); Haller, Reinhard, 88214 Ravensburg (DE); Loos, Eugen, 88048 Friedrichshafen (DE); Schmidt, Ruslan, 88048 Friedrichshafen - Kluftern (DE)
(74) Vertreter: Nückel, Thomas

(56) Entgegenhaltungen:
- WO-A1-2013/165181
- DE-A1-102010 009 069
- US-A1- 2003 234 272

## Beschreibung

### Technisches Gebiet

Die Erfindung betrifft eine Pulverbeschichtungsanlage zum Beschichten eines Werkstücks mit Beschichtungspulver.

Bei der Beschichtung von Werkstücken mit Beschichtungspulver oder kurzum Pulver wird dieses über eine oder mehrere Pulversprühpistolen beziehungsweise Sprühapplikatoren auf das zu beschichtende Werkstück aufgesprüht. Das zu beschichtende Werkstück befindet sich während des Beschichtungsvorgangs innerhalb einer Pulverbeschichtungskabine, die im Folgenden auch kurzum als Kabine bezeichnet wird.

### Stand der Technik

Aus dem Stand der Technik DE102010009069 sowie DE 103 59 280 A1 sind gattungsgemäße Sprühbeschichtungsvorrichtungen bekannt. Die Sprühbeschichtungsvorrichtung dient zum Besprühen der Stirnseiten von Fahrzeugfelgen mit Beschichtungspulver. Die Vorrichtung enthält einen Flurförderer beziehungsweise Bodenförderer mit hintereinander angeordneten, motorisch drehbaren Spindeln, auf deren oberer Aufnahmefläche je eine der Felgen liegt. Die Anlage umfasst vier Sprühstationen, wobei an jeder der Sprühstationen je zwei Sprühpistolen diametral über einer Felge stationär und nicht drehbar angeordnet sind. Die zwei Sprühpistolen sind vertikal nach unten gerichtet, um Beschichtungspulver auf die darunterliegende Stirnseite der Felge zu sprühen, während die Spindel mit der Felge um die vertikale Drehachse an der Sprühstation rotiert. Zur Beschichtung der Rückseite der Felge sind zwei weitere, nach oben gerichtete stationäre Sprühpistolen vorgesehen. Bei einer Ausführungsform läuft der Flurförderer intermittierend, das heisst er stoppt während die Felge beschichtet wird. Dies hat den Nachteil, dass der Flurförderer jedes Mal gestoppt werden muss, wenn eine Felge beschichtet werden soll. Nachdem die Felge beschichtet ist, muss der Flurförderer erst wieder anfahren und dann, sobald die nächste Felge die Beschichtungsstation erreicht hat, wieder stoppen. Bei einer anderen Ausführungsform wird der Flurförderer kontinuierlich an den stationären Spritzpistolen vorbei bewegt, auch während der Beschichtung der Felgen. Um die Felgen mit ausreichend Beschichtungspulver beschichten zu können, muss der Flurförderer ausserordentlich langsam fahren. Beide Ausführungsformen haben den Nachteil, dass die Anzahl der pro Zeiteinheit beschichtbaren Felgen relativ beschränkt ist. Dem kann zwar entgegengewirkt werden, in dem eine Vielzahl von Sprühstationen eingesetzt wird. Dies hat aber dann den Nachteil, dass der Bauraum für die gesamte Beschichtungsanlage relativ gross wird.

### Darstellung der Erfindung

Eine Aufgabe der Erfindung ist es, eine Pulverbeschichtungsanlage zum Beschichten eines Werkstücks mit Beschichtungspulver anzugeben, bei der die Grundfläche der Pulverbeschichtungsanlage minimiert ist und gleichzeitig die Anzahl der pro Zeiteinheit beschichtbaren Werkstücke gross ist.

Vorteilhafter Weise ist bei der erfindungsgemässen Pulverbeschichtungsanlage die Dauer für den Farbwechsel minimal.

Vorteilhafterweise kann mit der der erfindungsgemässen Pulverbeschichtungsanlage der Gesamtenergieverbrauch für den Pulverbeschichtungsprozess reduziert werden. Dies wird unter anderem dadurch erreicht, dass die Pulverbeschichtungsanlage mit wenig Energie für die Absaugung auskommt.

Die Aufgabe wird durch eine Pulverbeschichtungsanlage zum Beschichten eines Werkstücks mit Beschichtungspulver mit den in Patentanspruch 1 angegebenen Merkmalen gelöst.

Die erfindungsgemässe Pulverbeschichtungsanlage zum Beschichten eines Werkstücks mit Beschichtungspulver umfasst eine Kabine, die derart ausgebildet ist, dass sie das über einen Bodenförderer angelieferte Werkstück aufnehmen kann. Zudem weist die Pulverbeschichtungsanlage eine obere Sprühapplikator-Anordnung, um Beschichtungspulver nach unten zu sprühen, und eine untere Sprühapplikator-Anordnung auf, um Beschichtungspulver nach oben zu sprühen. Dabei sind die obere und die untere Sprühapplikator-Anordnung auf dasselbe Werkstück ausgerichtet. Zudem ist ein Manipulator vorgesehen, an dem die obere und die untere Sprühapplikator-Anordnung befestigt sind. Der Manipulator ist so ausgebildet, dass mit ihm die Sprühapplikator-Anordnungen zumindest in Transportrichtung des Werkstücks bewegbar sind.

Vorteilhafte Weiterbildungen der Erfindung ergeben sich aus den in den abhängigen Patentansprüchen angegebenen Merkmalen.

Bei einer Ausführungsform der erfindungsgemässen Pulverbeschichtungsanlage weist die Kabine eine Manipulator-Öffnung auf, durch die die untere Sprühapplikator-Anordnung in die Kabine bewegbar ist. Zudem ist in der Kabine eine Pulver-Absaugöffnung vorgesehen, die gegenüber der Manipulator-Öffnung angeordnet ist. Durch diese Anordnung wird eine Querströmung erzeugt, die eine effiziente Reinhaltung der Kabine ermöglicht. Zudem wird dadurch erreicht, dass kaum Pulver bis zu den Kabinenwänden gelangen kann und dort anhaftet.

Bei einer anderen Ausführungsform der erfindungsgemässen Pulverbeschichtungsanlage ist eine horizontale Sprühapplikator-Anordnung vorgesehen, um horizontal Beschichtungspulver zu versprühen. Damit können vorteilhafter Weise auch die Seitenflächen des Werkstücks optimal beschichtet werden.

Bei einer weiteren Ausführungsform der erfindungsgemässen Pulverbeschichtungsanlage ist die horizontale Sprühapplikator-Anordnung am Manipulator befestigt und ist mit dem Manipulator horizontal bewegbar. Dadurch wird erreicht, dass mehr Zeit zum Beschichten des Werkstücks zur Verfügung steht.

Zudem kann bei der erfindungsgemässen Pulverbeschichtungsanlage eine Drehvorrichtung zum Drehen des zu beschichtenden Werkstücks vorgesehen sein. Dies hat den Vorteil, dass eine noch gleichmäßigere Beschichtung des Werkstücks möglich ist.

Die erfindungsgemässe Pulverbeschichtungsanlage kann auch mit einer elektrostatischen Aufladevorrichtung zum Aufladen des Beschichtungspulvers ausgestattet sein. Dadurch wird erreicht, dass das Beschichtungspulver besser am zu beschichtenden Werkstück anhaftet. Zudem kann dadurch die Form der Pulverwolke positiv beeinflusst werden.

Vorteilhafter Weise ist die Kabine bei der erfindungsgemässen Pulverbeschichtungsanlage kürzer als 3 m. Dies hat den Vorteil, dass die Kabine insgesamt ein geringeres Bauvolumen aufweist. Dadurch muss pro Zeiteinheit weniger Luft aus der Kabine abgesaugt werden, was insgesamt zu einem geringeren Energiebedarf führt.

Darüber hinaus kann bei der erfindungsgemässen Pulverbeschichtungsanlage im Kabinenboden ein Förderschlitz für den Bodenförderer vorgesehen sein. Zudem ist ein Gebläse zur Erzeugung eines Luftstroms vorgesehen. Am Kabinenboden ist ein Luftauslass vorgesehen, der den Luftstrom über den Förderschlitz hinweg zur Absaugöffnung hin ausgerichtet. Auf diese Art und Weise kann der Boden der Kabine einfach gereinigt werden. Zudem kann damit auch zumindest der untere Teil der Transportspindeln frei von Pulver gehalten werden. Es wird auch verhindert, dass Pulver in den Förderschlitz fällt und den Bodenförderer verschmutzt.

Bei einer Weiterbildung der erfindungsgemässen Pulverbeschichtungsanlage weist die obere Sprühapplikator-Anordnung wenigstens einen Sprühapplikator und einen Antrieb auf, mit dem der Sprühapplikator vertikal bewegbar ist. Dies hat den Vorteil, dass der Abstand des Sprühapplikators automatisch an verschiedene hohe Werkstücke angepasst werden kann.

Bei einer anderen Weiterbildung der erfindungsgemässen Pulverbeschichtungsanlage weist die obere Sprühapplikator-Anordnung einen weiteren Antrieb auf, mit dem der Sprühapplikator horizontal bewegbar ist. Damit kann vorteilhafte Weise die obere Sprühapplikator-Anordnung an verschiedene Werkstückabmessungen automatisch angepasst werden. Bei einem rotationsymmetrischen Werkstück kann die Sprühapplikator-Anordnung an den Durchmesser des Werkstücks angepasst werden.

Bei einer zusätzlichen Weiterbildung der erfindungsgemässen Pulverbeschichtungsanlage ist eine mit Druckluft betreibbare Abblaseinrichtung zum Abblasen des unteren Sprühapplikators der Sprühapplikator-Anordnung vorgesehen. Die Abblaseinrichtung kann auch so ausgebildet sein, dass sie zudem zum Abblasen des Sprühapplikators der horizontalen Sprühapplikator-Anordnung dient. Mit dieser Anordnung können die horizontale Sprühapplikator-Anordnung und/oder die untere Sprühapplikator-Anordnung einfach und kostengünstig automatisch gereinigt werden. Die Abblaseinrichtung kann auch so ausgebildet sein, dass damit auch die oberen Sprühapplikatoren gereinigt werden können.

Es ist von Vorteil, bei der erfindungsgemässen Pulverbeschichtungsanlage eine Steuerung vorzusehen, die derart ausgebildet und betreibbar ist, dass sie die Sprühapplikator-Anordnungen synchron mit dem zu beschichtenden Werkstück bewegt. Dadurch kann die Verweildauer, als die Zeitdauer, während der sich das Werkstück im Bereich der Sprühapplikator-Anordnungen befindet, verlängert werden.

Darüber hinaus kann die Steuerung der erfindungsgemässen Pulverbeschichtungsanlage derart ausgebildet und betreibbar sein, dass sie die Positionen der Sprühapplikator-Anordnungen an den jeweiligen Werkstücktypus anpasst. Dies hat den Vorteil, dass damit eine Produktion mit Losgrösse eins erreichbar ist.

Bei einer Ausführungsform der erfindungsgemässen Pulverbeschichtungsanlage ist der Manipulator ein Roboter. Durch den Einsatz eines Roboters ist die Pulverbeschichtungsanlage besonders flexibel einsetzbar.

Bei einer weiteren Ausführungsform der erfindungsgemässen Pulverbeschichtungsanlage ist eine Werkstück-Abblaseinrichtung vorgesehen, um einen bestimmten Bereich des Werkstücks vom Beschichtungspulver zu befreien. Dadurch kann eine vorherige Maskierung des Werkstücks entfallen.

Darüber hinaus wird eine Beschichtungsanlage vorgeschlagen, die zwei der oben beschriebenen Pulverbeschichtungsanlagen umfasst. Dabei sind die erste und die zweite Pulverbeschichtungsanlage in Bezug auf den Bodenförderer hintereinander angeordnet.

Wenn beide Pulverbeschichtungsanlagen gleichzeitig in Betrieb sind (also Werkstücke beschichten), kann der Durchsatz (Anzahl der pro Zeiteinheit beschichteten Werkstücke) erhöht werden.

Zudem ist es möglich, dass die erste Pulverbeschichtungsanlage mit einem ersten Pulver (erster Farbton) und die zweite Pulverbeschichtungsanlage mit einem zweiten Pulver (zweiter Farbton) versorgt wird. Während des Beschichtungsbetriebs beschichtet entweder die eine oder die andere Pulverbeschichtungsanlage. Soll ein Farbwechsel stattfinden, wird in der Regel der Beschichtungsprozess zunächst gestoppt, um diejenige Pulverbeschichtungsanlage grob reinigen zu können, die bisher die Werkstücke beschichtet hat. Dabei werden die Wände und die Decke dieser Pulverbeschichtungsanlage grob gereinigt und dafür gesorgt, dass später, wenn die gesamte Anlage wieder im Beschichtungsbetrieb ist, kein Restpulver (mit dem falschen Farbton) auf die zu beschichtenden Werkstücke gelangen kann. Diese Grobreinigung nimmt nur relativ wenig Zeit in Anspruch. Anschliessend wird der Beschichtungsprozess mit der anderen Pulverbeschichtungskabine und dem dort verwendeten Pulver (anderer Farbton) fortgesetzt. Bei der vorgeschlagenen Ausführungsform kann ein Farbwechsel besonders schnell durchgeführt werden.

Wenn die Kabinen der beiden Pulverbeschichtungsanlagen etwas weiter voneinander entfernt angeordnet sind, hat dies den Vorteil, dass ein Farbwechsel besonders schnell und einfach realisierbar ist. Die beiden Kabinen haben vorteilhafter Weise einen so grossen Abstand, dass beim Abblasen der einen Kabine kein Pulver in die andere Kabine geblasen wird beziehungsweise von der anderen Kabine angesaugt wird. Zudem sorgt ein ausreichender Abstand zwischen den beiden Kabinen dafür, dass keine Farbverschleppung entsteht.

Schliesslich wird eine Beschichtungsanlage mit zwei der oben beschriebenen Pulverbeschichtungsanlagen vorgeschlagen, wobei für der Pulverbeschichtungsanlagen ein Zyklonabscheider vorgesehen ist. Mit einer solchen Anordnung kann die erste Pulverbeschichtungsanlage mit einem ersten Pulver (erster Farbton) und die zweite Pulverbeschichtungsanlage mit einem zweiten Pulver (zweiter Farbton) versorgt werden. Die gesamte Anlage kann wie oben beschrieben betrieben werden. Weil für jede der Pulverbeschichtungsanlagen ein eigener Zyklonabscheider vorgesehen ist, kann das abgesaugte, überschüssige Pulver sortenrein zurückgewonnen und wieder zum Beschichten benutzt werden.

### Kurze Beschreibung der Zeichnungen

Im Folgenden wird die Erfindung mit mehreren Ausführungsbeispielen anhand von neun Figuren weiter erläutert.
- Figur 1: zeigt eine mögliche Ausführungsform der erfindungsgemässen Pulverbeschichtungsanlage in einer dreidimensionalen Ansicht.
- Figur 2: zeigt einen vergrösserten Ausschnitt der erfindungsgemässen Pulverbeschichtungsanlage in einer dreidimensionalen Ansicht.
- Figur 3: zeigt die erfindungsgemässe Pulverbeschichtungsanlage von vorne mit dem Manipulator in einer ersten Stellung.
- Figur 4: zeigt die erfindungsgemässe Pulverbeschichtungsanlage von vorne mit dem Manipulator in einer zweiten Stellung.
- Figur 5: zeigt die erfindungsgemässe Pulverbeschichtungsanlage in der Seitenansicht.
- Figur 6: zeigt die erfindungsgemässe Pulverbeschichtungsanlage von oben.
- Figur 7: zeigt eine Beschichtungsanordnung, die neben der erfindungsgemässen Pulverbeschichtungsanlage noch weitere Komponenten umfasst.
- Figur 8: zeigt eine zweite Beschichtungsanordnung, die zwei der erfindungsgemässen Pulverbeschichtungsanlagen umfasst.
- Figur 9: zeigt eine dritte Beschichtungsanordnung mit zwei der erfindungsgemässen Pulverbeschichtungsanlagen.

### Wege zur Ausführung der Erfindung

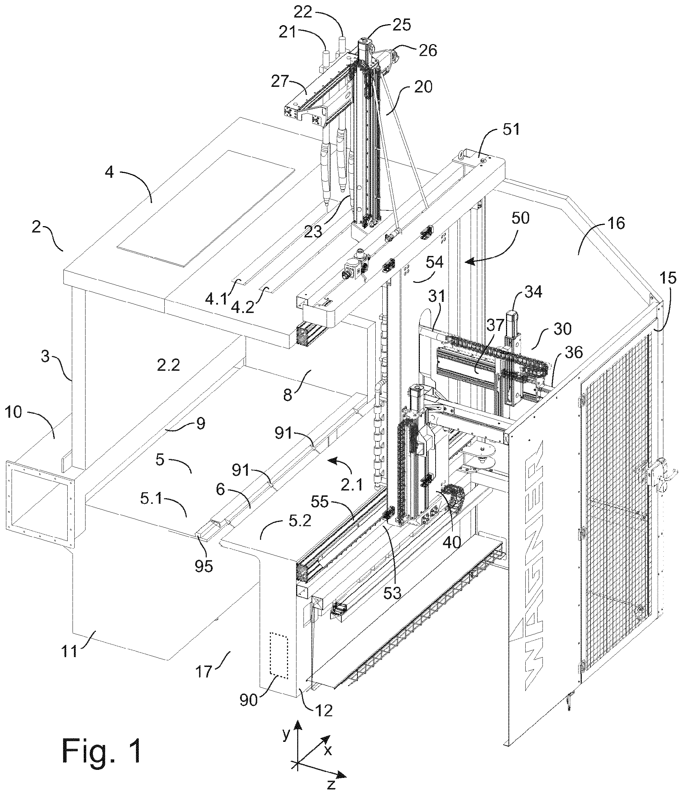

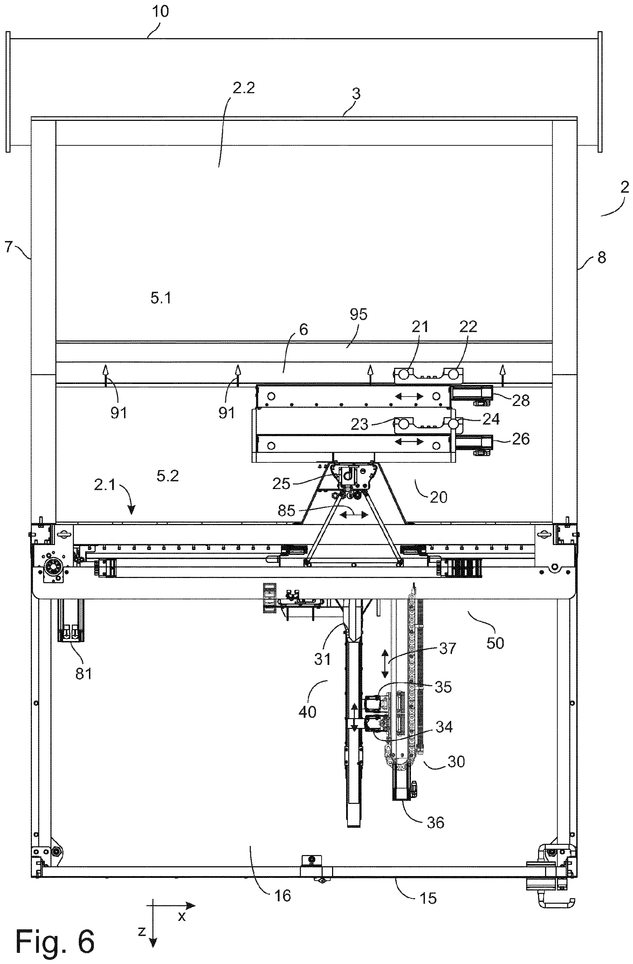

Eine erste mögliche Ausführungsform der erfindungsgemässen Pulverbeschichtungsanlage ist in den Figuren 1 bis 6 in verschiedenen Ansichten dargestellt. Die Pulverbeschichtungskabine 2 umfasst eine Rückwand 3, eine Seitenwand 7, eine Seitenwand 8, ein Dach 4, einen Boden 5 und eine Öffnung 2.1 für einen Manipulator 50. Der Boden 5 der Kabine 2 wird von einer Unterkonstruktion 11, 12 getragen und teilt sich in einem ersten Bodenabschnitt 5.1 und einen zweiten Bodenabschnitt 5.2 auf. Zwischen den beiden Bodenabschnitten 5.1 und 5.2 verläuft ein Schlitz 6. Der Schlitz 6 erstreckt sich über die gesamte Länge der Kabine 2. Unterhalb des Bodens 5 im Raum 17 befindet sich ein Bodenförderer 100. Der Bodenförderer 100 ist in der Regel auf dem Hallenboden 110 befestigt. Er dient dazu, ein Werkstück 200 zur und durch die Pulverbeschichtungsanlage hindurch zu transportieren und nachdem das Werkstück 200 in der Pulverbeschichtungsanlage beschichtet worden ist, wieder von dort abzutransportieren. Der Bodenförderer 100 ist unterhalb des Kabinenbodens 5 angeordnet, dessen Werkstückhalter 102 ragt zum Teil durch den Schlitz 6 hindurch.

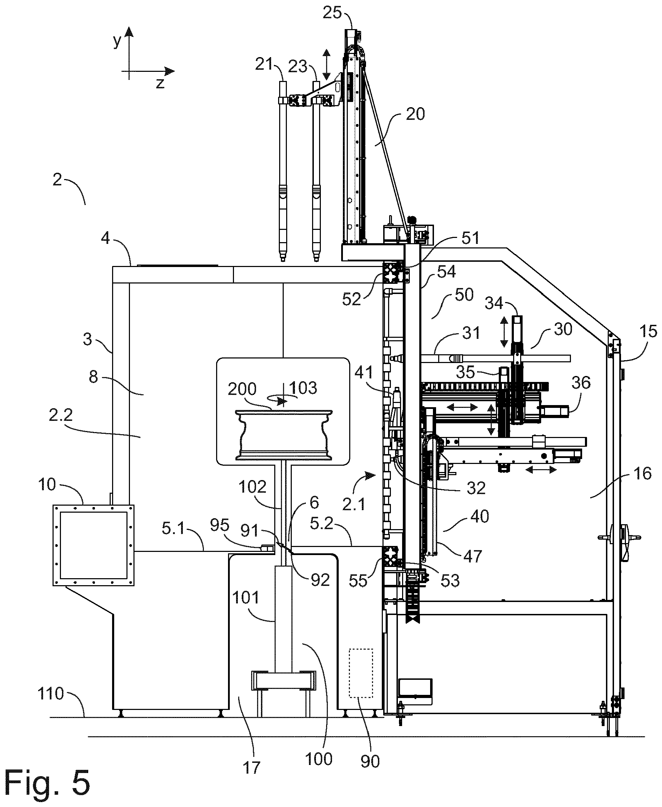

Der Bodenförderer 100 kann mit einer Drehvorrichtung 101 ausgestattet sein. Die Drehvorrichtung 101 ist dazu vorgesehen, das Werkstück 200 um die Längsachse des Werkstückhalters 102 rotieren zu lassen. Der Werkstückhalter 102 wird auch als Spindel bezeichnet. Die Rotation des Werkstücks 200 ist in Figur 5 durch den gekrümmten Pfeil 103 um die Längsachse des Werkstückhalters 102 symbolisch dargestellt.

Damit der Bodenförderer 100 das Werkstück 200 in die Kabine 2 transportieren kann, ist in der Seitenwand 7 der Kabine eine entsprechende Öffnung vorgesehen. Sinngemäß das gleiche gilt für die Seitenwand 8. In dieser ist ebenfalls eine entsprechende Öffnung für das Werkstück 200 vorgesehen.

Da beim Beschichtungsvorgang nicht alle von den Sprühpistolen beziehungsweise Sprühapplikatoren versprühten Pulverpartikel auf den zu beschichtenden Werkstücken 200 haften bleiben, muss das überschüssige Pulver, welches auch als Overspray bezeichnet wird, aus der Kabine 2 wieder entfernt werden. Dies ist zum einen deshalb notwendig, weil die Umgebung außerhalb der Kabine frei von Pulverstaub zu halten ist. Zum anderen steigt die Explosionsgefahr durch die in der Kabine 2 schwebende Pulverstaubwolke, wenn eine bestimmte Konzentration des Pulvers in der Luft überschritten wird. Dies gilt es zu vermeiden. Überschüssiges Pulver bereits während des Betriebs aus dem Inneren der Kabine 2 abzusaugen hat zudem den Vorteil, dass bei einem Farbwechsel die erforderlichen Reinigungsmaßnahmen weniger Zeit in Anspruch nehmen, weil sich grundsätzlich weniger Restpulver in der Kabine befindet. Würde die Kabine 2 und das Absaugsystem nicht ausreichend gereinigt, kann es nach einem Farbwechsel zu einer unerwünschten Farbverschleppung kommen.

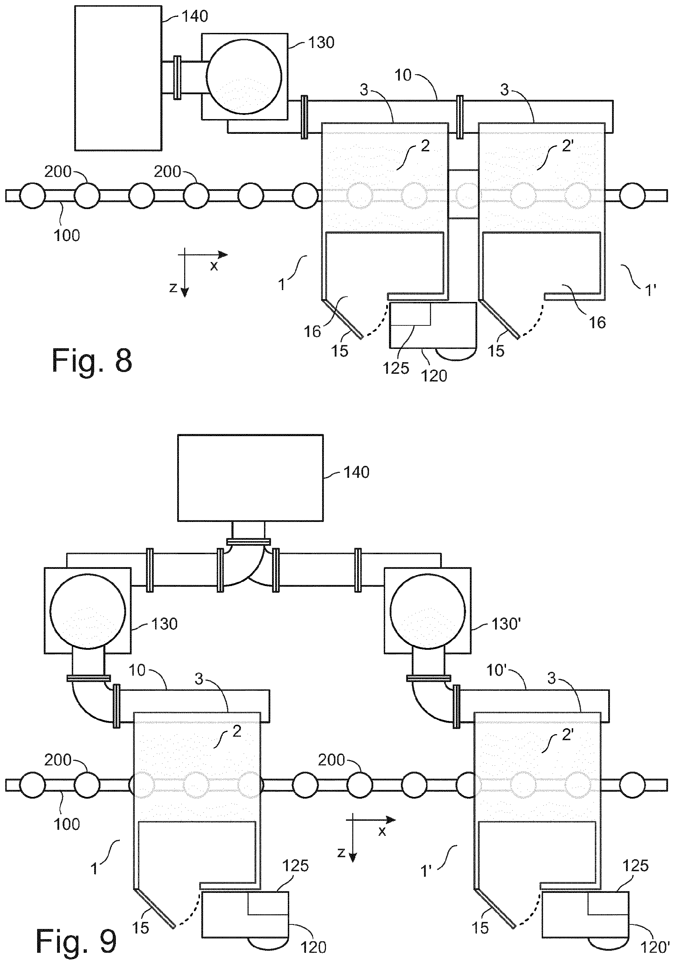

Um das Overspray aus der Kabine 2 abzusaugen, weist die Kabine 2 einen Absaugschlitz 9 auf. Der Absaugschlitz 9 kann sich zum Beispiel im unteren Bereich, vorzugsweise in Bodennähe in der Rückwand 3 befinden. Er verbindet das Innere der Kabine 2 mit einem Absaugrohr 10. Über den Absaugschlitz 9 und das Absaugrohr 10 wird somit überschüssiges Pulver als Pulver-Luftgemisch aus dem Kabineninneren abgesaugt gesaugt und einem Zyklonabscheider 130 oder kurzum Zyklon zugeführt, der als Monozyklon ausgebildet sein kann (siehe Figur 8). Das Pulver-Luftgemisch strömt tangential in den Zyklon 130 und im Zyklon spiralförmig nach unten. Dabei werden die Pulverpartikel durch die bei der Rotation des Pulver-Luftstroms entstehende Zentrifugalkraft nach aussen an die Aussenwand des Zyklons 130 gedrückt. Die Pulverpartikel werden nach unten in Richtung des Pulverauslasses des Zyklons gefördert und dort gesammelt. Die von den Pulverpartikeln befreite Luft wird über das im Zyklon befindliche, vertikale Zentralrohr abgesaugt. Der so gereinigte Luftstrom wird häufig noch einem Nachfilter 140 zugeführt, um auch noch das in der Luft verbliebene restliche Pulver herauszufiltern. Das im Zyklon 130 zurückgewonnene Pulver kann erneut zur Beschichtung verwendet und der Pulverbeschichtungsanlage beziehungsweise einem Pulverzentrum 120 zugeführt werden.

Im Bereich der Unterkonstruktion 11, 12 kann ein Gebläse 90 zur Erzeugung eines Luftstroms 91 angeordnet sein. Im Bodenabschnitt 5.2 befinden sich eine oder mehrere Luftauslässe, die dafür sorgen, dass der Luftstrom 91 quer zur Längsrichtung des Schlitzes 6 und damit zum Absaugschlitz 9 hin ausgerichtet ist. Der Luftstrom 91 sorgt unter anderem dafür, dass kein oder nur sehr wenig Pulver in den Förderschlitz fällt und den Bodenförderer verschmutzt.

Wenn sich das zu beschichtende Werkstück 200 in der Kabine 2 befindet, ragt der Werkstückträger 102 durch den Förderschlitz 6. Der vom Gebläse 90 erzeugte Luftstrom 91 dient unter anderem dazu, zumindest den unteren Bereich des Werkstückträgers 102 abzublasen, sodass an ihm kein oder nur weniger Pulver anhaftet. Zudem wird durch den Luftstrom 91 verhindert, dass Pulver durch den Schlitz 6 nach unten zum Bodenförderer 100 gelangt.

In der Nähe des Schlitzes 6 kann sich auf dem ersten Bodenabschnitt 5.1 eine Blasleiste 95 befinden. Die Blasleiste 95 ist vorgesehen, um mittels Druckluft 96 den ersten Bodenabschnitt 5.1 von überschüssigem Pulver zu befreien. Die Blasleiste 95 kann dazu eine Reihe von Druckluftdüsen aufweisen. Die Druckluftdüsen der Blasleiste 95 sind vorzugsweise so ausgerichtet, dass sie Druckluft 96 entlang des ersten Bodenabschnitts 5.1 in Richtung des Absaugschlitzes 9 blasen. Der Druckluftstrom 91 kann dabei unterstützend wirken.

Die Blasleiste 95 kann in unmittelbarer Nähe zum Schlitz 6 angeordnet sein. Bei der in Figur 1 gezeigten Ausführungsform erstreckt sich die Blasleiste 95 von der ersten Seitenwand 7 bis zur zweiten Seitenwand 8. Die Blasleiste 95 kann mehrere Blasleistenabschnitte umfassen, durch die Druckluft L in Richtung der Absaugöffnungen 9 geblasen werden kann. Die Blasleistenabschnitte können so aufgebaut sein, dass sie unabhängig voneinander betrieben werden können.

Auf der offenen Seite 2.1 der Kabine 2 ist ein in Längsrichtung x der Kabine 2 beweglicher Manipulator 50 angeordnet. Der Manipulator 50 umfasst eine obere Führung 51 und eine untere Führung 53. Am Kabinendach 4 ist eine Führungsschiene 52 befestigt, die zusammen mit der oberen Führung 51 eine obere Linearführung bildet.

In etwa auf der Höhe des Kabinenbodens 5 findet sich eine untere Führungsschiene 55, die am Untergestell 12 gefestigt ist und die mit der unteren Führung 53 eine untere Linearführung bildet. Die obere Führung 51 und die untere Führung 53 sind mit einer Tragstruktur 54 verbunden.

An der Tragstruktur 54 ist eine horizontale Sprühapplikator-Anordnung 30 befestigt. Die horizontale Sprühapplikator-Anordnung 30 ist dazu vorgesehen Beschichtungspulver im Wesentlichen horizontal zu versprühen. Die Sprühapplikator-Anordnung 30 weist dazu einen oder mehrere Sprühapplikatoren 31, 32 auf. Vorzugsweise kann jeder der Sprühapplikatoren 31, 32 mithilfe eines Antriebs 34 beziehungsweise 35 vertikal, also in y-Richtung, bewegt werden. Zudem kann vorgesehen sein, dass die Sprühapplikatoren 31 und 32 mittels eines Linearantriebs 36 auch horizontal, also in z-Richtung, in die Kabine und aus der Kabine heraus bewegt werden können.

Die Tragstruktur 54 weist zudem eine untere Sprühapplikator-Anordnung 40 auf. Die untere Sprühapplikator-Anordnung 40 ist dazu vorgesehen Beschichtungspulver im Wesentlichen nach oben zu sprühen. Die Sprühapplikator-Anordnung 40 weist dazu einen oder mehrere, vorzugsweise vertikal ausgerichtete Sprühapplikatoren 41 auf. Vorzugsweise kann jeder der Sprühapplikatoren 41 mithilfe eines Antriebs 42 in y-Richtung, bewegt werden.

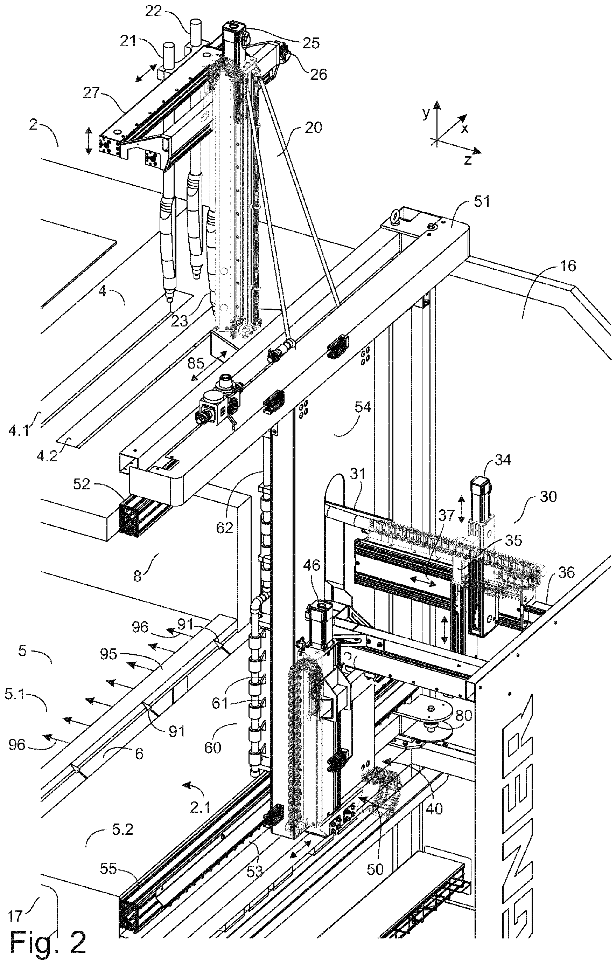

Oberhalb der Kabine 2 kann am oberen Bereich der Tragstruktur 54 des Manipulators 50 eine obere Sprühapplikator-Anordnung 20 befestigt sein. Bei der in Figur 1 und 2 gezeigten Ausführungsform der Pulverbeschichtungsanlage umfasst die obere Sprühapplikator-Anordnung 20 vier vertikal ausgerichtete Sprühapplikatoren 21, 22, 23 und 24. Mithilfe eines Antriebs 25 sind die vier Sprühapplikatoren vertikal bewegbar. Über einen weiteren Antrieb 28 können die am Tragarm 27 befestigten Sprühapplikatoren 21 und 22 in x-Richtung bewegt werden. Über einen zusätzlichen Antrieb 26 können die am Tragarm 27 befestigten Sprühapplikatoren 23 und 24 in x-Richtung bewegt werden. Damit können die beiden Sprühapplikatoren 21 und 22 unabhängig von beiden Sprühapplikatoren 23 und 24 in x-Richtung bewegt werden.

Im Dach 4 der Kabine 2 sind schlitzförmige Öffnungen 4.1 und 4.2 vorgesehen, durch die die Sprühapplikatoren 21 und 22 beziehungsweise 23 und 24 durch das Dach 4 hindurch ins Innere der Kabine bewegt werden können.

Die Anzahl der zu verwenden Sprühapplikatoren hängt von der jeweiligen Anwendung ab. Ist beispielsweise, wie in Figur 5 gezeigt, das Werkstück 200 eine Autofelge, kann die obere Sprühapplikator-Anordnung 20 vier Sprühapplikatoren 21, 22, 23 und 24, die untere Sprühapplikator-Anordnung 40 zwei Sprühapplikatoren 41 und die horizontale Sprühapplikator-Anordnung 30 zwei Sprühapplikatoren 31, 32 aufweisen. Stattdessen ist es auch möglich die obere Sprühapplikator-Anordnung 20 mit nur einem Sprühapplikator auszustatten. Es kann auch vorgesehen sein, dass die untere Sprühapplikator-Anordnung 40 mit nur einem Sprühapplikator ausgestattet ist. In einer zur Felgenbeschichtung bevorzugten Ausführungsform weist die untere Sprühapplikator-Anordnung 40 drei Sprühapplikatoren auf.

Der Manipulator 50 kann zum Beispiel mithilfe eines Kettenantriebs (dessen Kette ist in den Figuren nicht gezeigt) in x-Richtung bewegt werden. Statt der Kette kann auch ein Flachriemen oder ein Zahnriemen eingesetzt werden. An der Kabine 2 können hierfür entsprechende Umlenkrollen 80 und ein Antriebsmotor 81 vorgesehen sein. Der Pfeil 85 kennzeichnet symbolisch die Bewegungsrichtung des Manipulators 50.

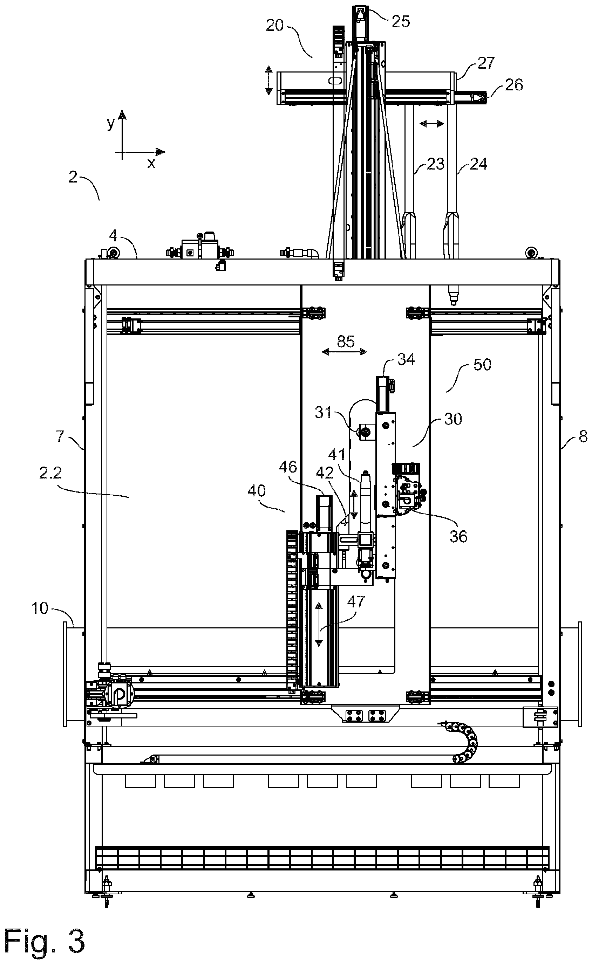

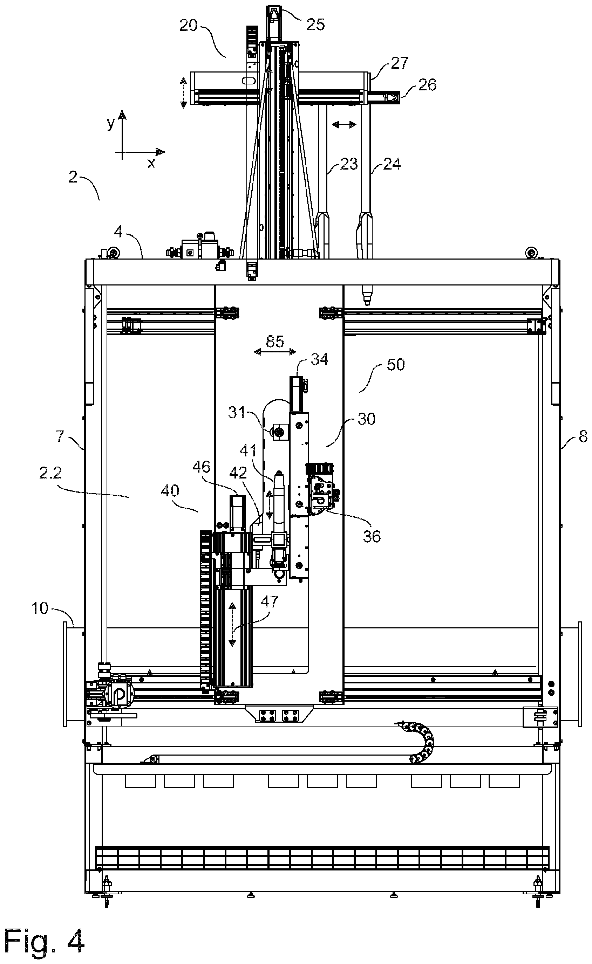

In Figur 3 ist die erfindungsgemässe Pulverbeschichtungsanlage von vorne dargestellt, wobei sich der Manipulator 50 in einer ersten Stellung befindet. Figur 4 zeigt die Pulverbeschichtungsanlage in derselben Ansicht wie Figur 3, jedoch befindet sich der Manipulator 50 hier in einer zweiten Stellung. Wie aus den beiden Figuren 3 und 4 zu erkennen ist, bewegt der Manipulator 50 neben der unteren Sprühapplikator-Anordnung 40 auch die horizontale Sprühapplikator-Anordnung 30 und die obere Sprühapplikator-Anordnung 20 in x-Richtung.

In einer Ausführungsform der Pulverbeschichtungsanlage ist der Vorraum 16 vor der Kabine 2 abgezäunt und über eine Tür 15 für das Bedienungspersonal zugänglich. Während die Pulverbeschichtungsanlage die Werkstücke 200 automatisch beschichtet, darf sich aus Sicherheitsgründen kein Bedienungspersonal im Vorraum 16 der Kabine 2 befinden. Während dieser Zeit ist die Tür 15 geschlossen zu halten.

Wird mit der Pulverbeschichtungsanlage zum Beispiel als Werkstück 200 eine Autofelge beschichtet, so wird die Felge zuerst vom Bodenförderer 100 in die Kabine 2 transportiert. Der Bodenförderer 100 muss während des Beschichtung der Felge nicht angehalten werden. Viel mehr transportiert er mit vorzugsweise kontinuierliche Geschwindigkeit die Autofelge durch die Kabine 2. Während die Felge durch die Kabine transportiert wird, bewegt sich der Manipulator 50 vorzugsweise mit der gleichen Geschwindigkeit wie die Felge parallel zur Felge. Der Manipulator 50 bewegt sich somit vorzugsweise synchron zur Felge. Die Position der Felge in der Kabine 2 beziehungsweise deren Eintritt in die Kabine 2 kann mithilfe einer Lichtschranke detektiert werden. Die Geschwindigkeit des Bodenförderers 100 kann beispielsweise mithilfe eines Inkrementalgebers ermittelt werden. Die Steuerung 120 veranlasst rechtzeitig, dass die Pulversprühapplikatoren 21 - 41 die zur Felge passenden Abstände einnehmen. Anschließend fährt der Manipulator 50 zusammen mit der Felge wie oben beschrieben an der Kabine entlang und die Sprühapplikatoren 21 - 41 sprühen Pulver auf die Felge. Die Felge kann dabei vorzugsweise mit Hilfe der Drehvorrichtung 101 gedreht werden, um den Beschichtungsvorgang zu beschleunigen und/oder um die Beschichtung besonders gleichmässig auszuführen.

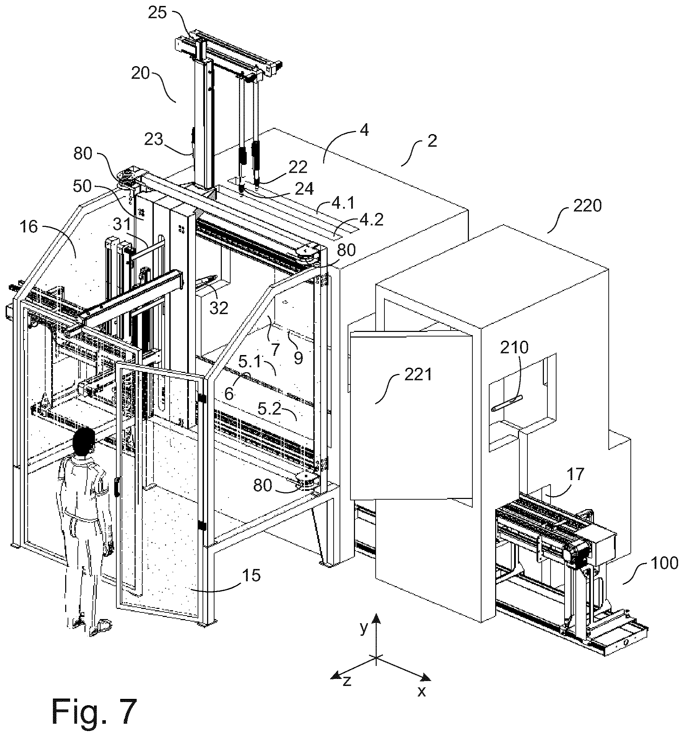

Figur 7 zeigt eine Beschichtungsanordnung, die neben der erfindungsgemässen Pulverbeschichtungsanlage noch weitere Komponenten umfasst. Unterhalb der Pulverbeschichtungsanlage verläuft durch die Pulverbeschichtungsanlage der Bodenförderer 100. An die Kabine 2 schließt sich eine weitere Kabine 220 an.

In einer möglichen Ausführungsform weist die Kabine 220 eine Tür 221 auf, über die das Innere der Kabine 220 zugänglich ist. Durch diese Öffnung kann das Bedienungspersonal die in der Kabine 2 automatisch beschichteten Werkstücke 200 manuell nachbeschichten. Die weitere Kabine 220 kann noch kürzer und damit kleiner ausgebildet sein als die Kabine 2.

In einer weiteren möglichen Ausführungsform weist die Kabine 220 eine Abblaseinrichtung 210 auf (in Figur 7 symbolisch dargestellt), die dazu dient, das vorher automatisch beschichtete Werkstück 200 teilweise wieder vom Beschichtungspulver zu befreien. Wird die Beschichtungsanlage dazu benutzt Autofelgen zu beschichten, kann mithilfe der Abblaseinrichtung 210 die Felgenschultern der Felge wieder von Beschichtungspulver befreit werden.

Figur 8 zeigt eine Beschichtungsanordnung, die zwei der oben beschriebenen Pulverbeschichtungsanlagen umfasst. Die Kabine 2 der ersten Pulverbeschichtungsanlage 1 und die Kabine 2' der zweiten Pulverbeschichtungsanlage 1' können baugleich sein. In diesem Fall befindet sich in der Kabine 2 ein erster Manipulator 50 und in der Kabine 2' ein weiterer Manipulator 50. Die beiden Manipulatoren können mithilfe einer Steuerung 125 gesteuert werden. Die Steuerung 125 kann Teil des Pulverzentrums 120 sein. Sie kann aber auch in einem separaten Steuerschrank untergebracht sein. Die Steuerung 125 kann dafür sorgen, dass mit der ersten Pulverbeschichtungsanlage 1 nur jedes zweite Werkstück 200 beschichtet wird. Die von der ersten Pulverbeschichtungsanlage 1 nicht beschichteten Werkstücke 200 werden in der zweiten Pulverbeschichtungsanlage 1' beschichtet. Beide Pulverbeschichtungsanlagen 1 und 1' sind über die Absaugleitung 10 mit dem Zyklon 130 verbunden. Das Zyklon 130 wiederum ist mit dem Nachfilter 140 verbunden.

Der Manipulator 50 kann, wie in den Figuren 1 bis 7 dargestellt, als Portalroboter ausgebildet sein. Der Portalschlitten wird im Wesentlichen durch die obere Führung 51, die untere Führung 53 und die Tragstruktur 54 gebildet und ist für die Horizontalbewegung in x-Richtung zuständig. Die Bewegung entlang der z-Achse und entlang der y-Achse wird von Portalarmen durchgeführt. In den Figuren sind drei Portalarme gezeigt, an denen die Sprühapplikatoren 21 - 42 befestigt sind. Die obere Sprühapplikator-Anordnung 20 ist an einem ersten Portalarm, die horizontale Sprühapplikator-Anordnung 30 ist an einem zweiten Portalarm und die untere Sprühapplikator-Anordnung 20 ist an einem dritten Portalarm befestigt. Es kann auch vorgesehen sein, dass sich zum Beispiel der erste Portalarm auch zusätzlich noch in x-Richtung bewegen kann.

Der Manipulator 50 kann nicht nur eine, sondern mehrere Trägerstrukturen 54 aufweisen. Diese können unabhängig voneinander in x-Richtung bewegbar sein. Vorzugsweise sind die Bewegungen der Trägerstrukturen 54 in x-Richtung jedoch zueinander synchronisiert. Jede der Tragstrukturen 54 kann zum Beispiel einen oder mehrere der Portalarme und damit einen oder mehrere der Sprühapplikator-Anordnung 20 tragen.

Es kann auch vorgesehen sein, dass in der ersten Pulverbeschichtungsanlage ein als Einarm-Roboter beziehungsweise Industrieroboter ausgebildeter Manipulator 50 eingesetzt wird. Der Einarm-Roboter ist besonders gut zum Beschichten von Werkstücken mit komplizierten Konturen geeignet und kann beispielsweise die Vorbeschichtung des Werkstücks übernehmen.

Figur 9 zeigt eine weitere Beschichtungsanordnung mit zwei der erfindungsgemässen Pulverbeschichtungsanlagen 1 und 1'. Bei dieser Ausführungsform ist die erste Pulverbeschichtungsanlage 1 über die Absaugleitung 10 mit einem ersten Zyklon 130 und die zweite Pulverbeschichtungsanlage 1' über die Absaugleitung 10' mit einem zweiten Zyklon 130' verbunden. Die beiden Zyklone 130 und 130' können baugleich sein. Auslassseitig sind die beiden Zyklone 130 und 130' mit einem Nachfilter 140 verbunden. Die erste Pulverbeschichtungsanlage 1 kann mit einer ersten Farbe, zum Beispiel schwarz, betrieben werden. Die zweite Pulverbeschichtungsanlage 1' kann mit einer anderen Farbe, zum Beispiel weiß, betrieben werden. Das in den beiden Zyklonen 130 und 130' zurückgewonnene Pulver kann der entsprechenden Pulverbeschichtungsanlage 1 beziehungsweise 1' wieder zugeführt werden.

### Beispiel Zwei-Farbensystem

Bei einem zwei Farbensystem wird die erste Pulverbeschichtungsanlage 1 mit einem ersten Pulver mit einem ersten Farbton aus einem ersten Pulverzentrum 120 und die zweite Pulverbeschichtungsanlage 1' mit einem zweiten Pulver mit einem zweiten Farbton aus einem zweiten Pulverzentrum 120' versorgt. Während des Beschichtungsbetriebs beschichtet entweder die Pulverbeschichtungsanlage 1 oder die Pulverbeschichtungsanlage 1'. Hat zum Beispiel bisher die Pulverbeschichtungsanlage 1 beschichtet und soll nun ein Farbwechsel stattfinden, wird in der Regel der Beschichtungsprozess zunächst gestoppt und dafür gesorgt, dass sich keine Werkstücke 200 mehr in den Kabinen 2 und 2' befinden. Nun wird die Pulverbeschichtungsanlage 1 grob gereinigt. Dabei werden die Wände 3, 7, 8 und die Decke 4 der Pulverbeschichtungsanlage 1 grob gereinigt und dafür gesorgt, dass später, wenn die gesamte Anlage wieder im Beschichtungsbetrieb ist, kein Restpulver (mit dem falschen Farbton) auf die zu beschichtenden Werkstücke gelangen kann. Anschliessend wird der Beschichtungsprozess mit der zweiten Pulverbeschichtungskabine 1' und dem dort verwendeten zweiten Pulver mit dem zweiten Farbton fortgesetzt.

### Beispiel Ein-Farbensystem

Bei einem Ein-Farbensystem wird die erste Pulverbeschichtungsanlage 1 mit dem gleichen Pulver wie die zweite Pulverbeschichtungsanlage 1' aus einem gemeinsamen Pulverzentrum 120 versorgt. Während des Beschichtungsbetriebs beschichten beide Pulverbeschichtungsanlagen 1 und 1' gleichzeitig. Soll ein Farbwechsel stattfinden, wird der Beschichtungsprozess zunächst gestoppt und dafür gesorgt, dass sich keine Werkstücke 200 mehr in den Kabinen 2 und 2' befinden. Nun werden beide Pulverbeschichtungsanlagen 1 und 1' soweit gereinigt, dass beim anschliessenden Beschichten mit einem anderen Farbton keine Farbverschleppung auftritt.

Es ist auch möglich den Vorgang des Farbwechsels so zu gestalten, dass vor Beginn der Kabinenreinigung Vorarbeiten am Pulverzentrum 120 durchgeführt werden können, während eine der Pulverbeschichtungsanlagen 1 beziehungsweise 1' noch am Beschichten ist.
Es ist zudem möglich den Vorgang des Farbwechsels so zu gestalten, dass am Pulverzentrum 120 noch Nacharbeiten durchgeführt werden können, während eine der Pulverbeschichtungsanlagen 1 beziehungsweise 1' bereits wieder am Beschichten ist.

Die Pulverbeschichtungsanlage 1 kann darüber hinaus auch das Pulverzentrum 120 umfassen. Die Steuerung 125 für die Pulverbeschichtungsanlage kann sich zum Beispiel im oder am Pulverzentrum 120 befinden. Das Pulverzentrum 120, das eine Pulverversorgungseinrichtung und häufig auch eine eigene Lüftung umfasst, steht beim vorliegenden Ausführungsbeispiel neben der Kabine 2. Das Pulverzentrum 120 kann über eine Absaugleitung mit dem Nachfilter 140 verbunden sein. Dies ist insbesondere zur Reinigung der Pulverversorgungseinrichtung von Vorteil. Über das Pulverzentrum 120 werden Pulversprüh-Applikatoren über in den Figuren nicht gezeigte Pulverversorgungsleitungen mit Pulver versorgt.

Die vorhergehende Beschreibung der Ausführungsbeispiele gemäss der vorliegenden Erfindung dient nur zu illustrativen Zwecken. Im Rahmen der Erfindung sind verschiedene Änderungen und Modifikationen möglich. So sind beispielsweise die verschiedenen in den Figuren 1 bis 9 gezeigten Komponenten der Pulverbeschichtungsanlage auch auf eine andere als in den Figuren gezeigte Weise miteinander kombinierbar.

Statt wie in Figur 9 pro Pulverbeschichtungsanlage 1, 1' jeweils ein Zyklon 130, 130' vorzusehen, kann die gesamte Anlage auch mit nur einem einzigen Zyklon 130 betrieben werden. In diesem Fall ist zum Beispiel die erste Pulverbeschichtungsanlage 1 mit dem Zyklon 130 verbunden. Die zweite Pulverbeschichtungsanlage 1' ist über die Absaugleitung 10' direkt mit dem Nachfilter 140 verbunden. Die zweite Pulverbeschichtungsanlage 1' fährt also auf Verlust. Mit einer derartigen Gesamtanlage können zum Beispiel mit der ersten Pulverbeschichtungsanlage 1 Werkstücke 200 in einer Standardfarbe beschichtet werden. Mit der zweiten Pulverbeschichtungsanlage 1' können die Werkstücke bei Bedarf mit einer Sonderfarbe beschichtet werden. Mit diesem Gesamtaufbau wird erreicht, dass die Standardfarbe mithilfe des Zyklons 130 zurückgewonnen und wiederverwendet werden kann.

Grundsätzlich ist es aber auch möglich, die beiden Pulverbeschichtungsanlagen 1 und 1' gänzlich ohne die beiden Zyklone 130, 130' zu betreiben und sie statt dessen direkt mit dem oder auch mit jeweils einem Nachfilter 140 zu verbinden.

### Bezugszeichenliste

- 1: Pulverbeschichtungsanlage
- 1': Pulverbeschichtungsanlage
- 2: Kabine
- 2': Kabine
- 2.1: Manipulator-Öffnung
- 2.2: Kabineninnenraum
- 3: Kabinenrückwand
- 4: Kabinendecke
- 4.1: Öffnung in der Kabinendecke
- 4.2: Öffnung in der Kabinendecke
- 5: Kabinenboden
- 5.1: erstes Segment des Kabinenbodens
- 5.2: zweites Segment des Kabinenbodens
- 6: Schlitz im Kabinenboden
- 7: Kabinenseitenwand
- 8: Kabinenseitenwand
- 9: Absaugschlitz
- 10: Absaugrohr
- 10': Absaugrohr
- 11: Unterkonstruktion
- 12: Unterkonstruktion
- 15: Türe
- 16: Vorraum zur Kabine
- 17: Raum für Flurförderer
- 20: vertikale Sprühapplikator-Anordnung
- 21: Sprühapplikator
- 22: Sprühapplikator
- 23: Sprühapplikator
- 24: Sprühapplikator
- 25: Antrieb
- 26: Antrieb
- 27: Tragarm
- 28: Antrieb
- 30: horizontale Sprühapplikator-Anordnung
- 31: Sprühapplikator
- 32: Sprühapplikator
- 34: Antrieb
- 35: Antrieb
- 36: Antrieb
- 37: Linearführung
- 40: vertikale Sprühapplikator-Anordnung
- 41: Sprühapplikator
- 42: Sprühapplikator
- 46: Antrieb
- 47: Linearführung
- 50: Manipulator
- 51: obere Führung
- 52: obere Führungsschiene
- 53: untere Führung
- 54: Tragstruktur
- 55: untere Führungsschiene
- 60: Abblaseinrichtung
- 61: Düse
- 62: Leitung
- 80: Umlenkrolle
- 81: Antriebsmotor
- 85: Bewegungsrichtung
- 90: Gebläse
- 91: Luftstrom
- 92: Luftauslass
- 95: Blasleiste
- 96: Druckluft
- 100: Bodenförderer
- 101: Drehvorrichtung
- 102: Werkstückhalter
- 103: Drehbewegung
- 110: Hallenboden
- 120: Pulverzentrum
- 120': Pulverzentrum
- 125: Steuerung
- 130: Zyklonabscheider
- 130': Zyklonabscheider
- 140: Nachfilter
- 200: Werkstück
- 210: Abblaseinrichtung
- 220: Kabine
- 221: Tür

## Patentansprüche

1. Pulverbeschichtungsanlage zum Beschichten eines Werkstücks mit Beschichtungspulver,
- mit einer Kabine (2), die derart ausgebildet ist, dass sie das über einen Bodenförderer (100) angelieferte Werkstück (200) aufnehmen kann,
- bei der eine obere Sprühapplikator-Anordnung (20) vorgesehen ist, um Beschichtungspulver nach unten zu sprühen,
- bei der eine untere Sprühapplikator-Anordnung (40) vorgesehen ist, um Beschichtungspulver nach oben zu sprühen,
- bei dem die obere und die untere Sprühapplikator-Anordnung (20, 40) auf dasselbe Werkstück (200) ausgerichtet sind, und
- bei der ein Manipulator (50) vorgesehen ist, an dem die obere und die untere Sprühapplikator-Anordnung (20, 40) befestigt sind, und mit dem sie zumindest in Transportrichtung (x) des Werkstücks (200) bewegbar sind.

2. Pulverbeschichtungsanlage nach Patentanspruch 1,
- bei der die Kabine (2) eine Manipulator-Öffnung (2.1) aufweist, durch die der Manipulator (50) ragt,
- mit einer Pulver-Absaugöffnung (9), die gegenüber der Manipulator-Öffnung (2.1) angeordnet ist.

3. Pulverbeschichtungsanlage nach Patentanspruch 1 oder 2,
bei der eine horizontale Sprühapplikator-Anordnung (30) vorgesehen ist, um horizontal Beschichtungspulver zu versprühen.

4. Pulverbeschichtungsanlage nach Patentanspruch 3,
bei der die horizontale Sprühapplikator-Anordnung (30) am Manipulator (50) befestigt und mit dem sie horizontal bewegbar ist.

5. Pulverbeschichtungsanlage nach einem der vorherigen Patentansprüche,
mit einer Drehvorrichtung (101) zum Drehen des zu beschichtenden Werkstücks (200).

6. Pulverbeschichtungsanlage nach einem der vorherigen Patentansprüche,
mit einer elektrostatischen Aufladevorrichtung zum Aufladen des Beschichtungspulvers.

7. Pulverbeschichtungsanlage nach einem der vorherigen Patentansprüche,
bei der die Kabine (2) kürzer als 3 m ist.

8. Pulverbeschichtungsanlage nach einem der vorherigen Patentansprüche,
- bei der im Kabinenboden (5) ein Förderschlitz (6) für den Bodenförderer (100) vorgesehen ist,
- bei der ein Gebläse (90) zur Erzeugung eines Luftstroms (91) vorgesehen ist,
- bei der am Kabinenboden (5) ein Luftauslass (92) vorgesehen ist, der den Luftstrom (91) über den Förderschlitz (6) hinweg zur Absaugöffnung (9) hin ausgerichtet.

9. Pulverbeschichtungsanlage nach einem der vorherigen Patentansprüche,
bei der die obere Sprühapplikator-Anordnung (20) wenigstens einen Sprühapplikator (21) und einen Antrieb (25) aufweist, mit dem der Sprühapplikator (21) vertikal bewegbar ist.

10. Pulverbeschichtungsanlage nach Patentanspruch 9, bei der die obere Sprühapplikator-Anordnung (20) einen weiteren Antrieb (26) aufweist, mit dem der Sprühapplikator (21) horizontal bewegbar ist.

11. Pulverbeschichtungsanlage nach einem der Patentansprüche 2 bis 10,
mit einer mit Druckluft betreibbaren Abblaseinrichtung (60) zum Abblasen des unteren Sprühapplikators (41) der Sprühapplikator-Anordnung (40) und/oder zum Abblasen des Sprühapplikators (31) der horizontalen Sprühapplikator-Anordnung (30).

12. Pulverbeschichtungsanlage nach einem der vorherigen Patentansprüche,
mit einer Steuerung (125), die derart ausgebildet und betreibbar ist, dass die Sprühapplikator-Anordnungen (20, 30, 40) synchron mit dem Werkstück (200) bewegbar sind.

13. Pulverbeschichtungsanlage nach Patentanspruch 12, bei der die Steuerung (125) derart ausgebildet und betreibbar ist, dass sie die Positionen der Sprühapplikator-Anordnungen (20, 30, 40) an den jeweiligen Werkstücktypus (200) anpasst.

14. Pulverbeschichtungsanlage nach einem der vorherigen Patentansprüche,
bei der der Manipulator (50) ein Roboter ist.

15. Pulverbeschichtungsanlage nach einem der vorherigen Patentansprüche,
mit einer Werkstück-Abblaseinrichtung (210), um einen bestimmten Bereich des Werkstücks (200) vom Beschichtungspulver zu befreien.

16. Beschichtungsanlage mit einer ersten Pulverbeschichtungsanlage (1) und einer zweiten Pulverbeschichtungsanlage (1') nach einem der vorherigen Patentansprüche,
bei der die erste und die zweite Pulverbeschichtungsanlage (1, 1') in Bezug auf den Bodenförderer (100) hintereinander angeordnet sind.

17. Beschichtungsanlage mit einer ersten Pulverbeschichtungsanlage (1) und einer zweiten Pulverbeschichtungsanlage (1') nach einem der Patentansprüche 1 bis 15,
bei der für jede der Pulverbeschichtungsanlagen (1, 1') ein Zyklonabscheider (130, 130') vorgesehen ist.

## Claims

1. A powder coating assembly for coating a workpiece with coating powder,
- comprising a booth (2), which is formed such that it can receive the workpiece (200) delivered via a floor conveyor (100),
- wherein an upper spray applicator arrangement (20) is provided for spraying coating powder downward,
- wherein a lower spray applicator arrangement (40) is provided for spraying coating powder upward,
- wherein the upper and the lower spray applicator arrangement (20, 40) are oriented toward the same workpiece (200), and
- wherein a manipulator (50) is provided, to which the upper and the lower spray applicator arrangement (20, 40) are fastened, and are movable therewith at least in the transport direction (x) of the workpiece (200).

2. The powder coating assembly according to claim 1,
- wherein the booth (2) has a manipulator opening (2.1), through which the manipulator (50) protrudes,
- comprising a powder suction opening (9), which is arranged opposite the manipulator opening (2.1).

3. The powder coating assembly according to claim 1 or 2,
wherein a horizontal spray applicator arrangement (30) is provided for horizontally spraying coating powder.

4. The powder coating assembly according to claim 3,
wherein the horizontal spray applicator arrangement (30) is fastened to the manipulator (50) and is horizontally movable therewith.

5. The powder coating assembly according to any one of the preceding claims,
comprising a rotating device (101) for rotating the workpiece (200) to be coated.

6. The powder coating assembly according to any one of the preceding claims,
comprising an electrostatic charging device for charging the coating powder.

7. The powder coating assembly according to any one of the preceding claims,
wherein the booth (2) is shorter than 3 m.

8. The powder coating assembly according to any one of the preceding claims,
- wherein a conveyor slot (6) for the floor conveyor (100) is provided in the booth floor (5),
- wherein a fan (90) for generating an airflow (91) is provided,
- wherein an air outlet (92), which orients the airflow (91) beyond the conveyor slot (6) to the suction opening (9), is provided on the booth floor (5) .

9. The powder coating assembly according to any one of the preceding claims,
wherein the upper spray applicator arrangement (20) has at least one spray applicator (21) and a drive (25) with which the spray applicator (21) is vertically movable.

10. The powder coating assembly according to claim 9,
wherein the upper spray applicator arrangement (20) has a further drive (26) with which the spray applicator (21) is horizontally movable.

11. The powder coating assembly according to any one of claims 2 to 10,
comprising a compressed air-operable blow-off device (60) for blowing off the lower spray applicator (41) of the spray applicator arrangement (40) and/or for blowing off the spray applicator (31) of the horizontal spray applicator arrangement (30).

12. The powder coating assembly according to any one of the preceding claims,
comprising a controller (125), which is formed and can be operated such that the spray applicator arrangements (20, 30, 40) are movable synchronously with the workpiece (200).

13. The powder coating assembly according to claim 12,
wherein the controller (125) is formed and can be operated such that it adapts the positions of the spray applicator arrangements (20, 30, 40) to the respective workpiece type (200).

14. The powder coating assembly according to any one of the preceding claims,
wherein the manipulator (50) is a robot.

15. The powder coating assembly according to any one of the preceding claims,
comprising a workpiece blow-off device (210) for freeing a certain area of the workpiece (200) from the coating powder.

16. A coating assembly comprising a first powder coating assembly (1) and a second powder coating assembly (1') according to any one of the preceding claims, wherein the first and the second powder coating assembly (1, 1') are arranged one behind the other with respect to the floor conveyor (100).

17. A coating assembly comprising a first powder coating assembly (1) and a second powder coating assembly (1') according to any one of claims 1 to 15, wherein a cyclone separator (130, 130') is provided for each of the powder coating assemblies (1, 1').

## Revendications

1. Installation de revêtement par poudre pour l'enduction d'une pièce à usiner avec de la poudre de revêtement,
- avec une cabine (2) qui est conçue de façon à pouvoir recevoir la pièce à usiner (200) livrée au moyen d'un convoyeur au sol (100),
- dans laquelle est prévue une disposition applicateur-pulvérisateur supérieure (20) pour pulvériser la poudre de revêtement vers le bas,
- dans laquelle est prévue une disposition applicateur-pulvérisateur inférieure (40) pour pulvériser la poudre de revêtement vers le haut,
- dans laquelle les dispositions applicateur-pulvérisateur supérieure et inférieure (20, 40) sont orientées vers la même pièce à usiner (200) et
- dans laquelle est prévu un manipulateur (50) dans lequel sont fixées les dispositions applicateur-pulvérisateur supérieure et inférieure (20, 40) et avec lequel elles sont déplaçables au moins dans le sens de transport (x) de la pièce à usiner (200).

2. Installation de revêtement par poudre selon la revendication 1,
- dans laquelle la cabine (2) présente une ouverture de manipulateur (2.1), à travers laquelle dépasse le manipulateur (50),
- avec une ouverture d'aspiration de poudre (9) qui est disposée en face de l'ouverture de manipulateur (2.1).

3. Installation de revêtement par poudre selon la revendication 1 ou 2,
dans laquelle est prévue une disposition applicateur-pulvérisateur horizontale (30) pour pulvériser la poudre de revêtement horizontalement.

4. Installation de revêtement par poudre selon la revendication 3,
dans laquelle est fixée la disposition applicateur-pulvérisateur horizontale (30) sur le manipulateur (50) et avec lequel elle est déplaçable horizontalement.

5. Installation de revêtement par poudre selon l'une des revendications précédentes,
avec un dispositif de rotation (101) pour une rotation de la pièce à usiner (200) à enduire.

6. Installation de revêtement par poudre selon l'une des revendications précédentes,
avec un dispositif de charge électrostatique pour charger la poudre de revêtement.

7. Installation de revêtement par poudre selon l'une des revendications précédentes,
dans laquelle la cabine (2) est plus courte que 3 m.

8. Installation de revêtement par poudre selon l'une des revendications précédentes,
- dans laquelle une fente de convoyage (6) pour le convoyeur au sol (100) est prévue dans le plancher de la cabine (5),
- dans laquelle un ventilateur (90) est prévu pour générer un courant d'air (91),
- dans laquelle une sortie d'air (92) qui dirige le courant d'air (91) vers l'ouverture d'aspiration (9) par la fente de convoyage (6) est prévue sur le plancher de la cabine (5).

9. Installation de revêtement par poudre selon l'une des revendications précédentes,
dans laquelle la disposition applicateur-pulvérisateur supérieure (20) présente au moins un applicateur-pulvérisateur (21) et un entraînement (25), avec lequel l'applicateur-pulvérisateur (21) est déplaçable verticalement.

10. Installation de revêtement par poudre selon la revendication 9,
dans laquelle la disposition applicateur-pulvérisateur supérieure (20) présente un autre entraînement (26), avec lequel l'applicateur-pulvérisateur (21) est déplaçable horizontalement.

11. Installation de revêtement par poudre selon l'une des revendications 2 à 10,
avec un dispositif de soufflage (60) exploitable avec de l'air comprimé pour le soufflage de l'applicateur-pulvérisateur inférieur (41) de la disposition applicateur-pulvérisateur (40) et/ou pour le soufflage de l'applicateur-pulvérisateur (31) de la disposition applicateur-pulvérisateur horizontale (30) .

12. Installation de revêtement par poudre selon l'une des revendications précédentes,
avec une commande (125) qui est conçue et exploitable de manière à ce que les dispositions applicateur-pulvérisateur (20, 30, 40) soient déplaçables de manière synchrone avec la pièce à usiner (200).

13. Installation de revêtement par poudre selon la revendication 12,
dans laquelle la commande (125) est conçue et exploitable de manière à adapter les positions des dispositions applicateur-pulvérisateur (20, 30, 40) au type de pièce à usiner (200) respectif.

14. Installation de revêtement par poudre selon l'une des revendications précédentes,
dans laquelle le manipulateur (50) est un robot.

15. Installation de revêtement par poudre selon l'une des revendications précédentes,
avec un dispositif de soufflage pour pièce à usiner (210) pour libérer une zone définie de la pièce à usiner (200) de la poudre de revêtement.

16. Installation de revêtement avec une première installation de revêtement par poudre (1) et une deuxième installation de revêtement par poudre (1') selon l'une des revendications précédentes,
dans laquelle les première et deuxième installations de revêtement par poudre (1, 1') sont disposées l'une derrière l'autre par rapport au convoyeur au sol (100).

17. Installation de revêtement avec une première installation de revêtement par poudre (1) et une deuxième installation de revêtement par poudre (1') selon l'une des revendications 1 à 15,
dans laquelle un séparateur cyclone (130, 130') est prévu pour chacune des installations de revêtement par poudre (1, 1').
